Europäisches Patentamt

European Patent Office

Office européen des brevets

(11) Numéro de publication: **0 402 215 A1**

## DEMANDE DE BREVET EUROPEEN

(21) Numéro de dépôt: 90401486.7

(22) Date de dépôt: 01.06.90

(51) Int. Cl.5: **F16K 17/19, G21F 7/04**

(30) Priorité: 06.06.89 FR 8907442

(43) Date de publication de la demande:
**12.12.90 Bulletin 90/50**

(84) Etats contractants désignés:
**BE DE GB**

(71) Demandeur: **COMMISSARIAT A L'ENERGIE ATOMIQUE Etablissement de Caractère Scientifique Technique et Industriel 31/33, rue de la Fédération F-75015 Paris(FR)**

(72) Inventeur: **Kucheida, Gérard**
**49 Parc du Petit Bois**
**F-21120 Is Sur Tille(FR)**
Inventeur: **Leyoudec, Marc**
**22 rue du Cerceau**
**F-21120 Marcilly sur Tille(FR)**
Inventeur: **Carniel, Serge**
**61 rue de Bruges**
**F-21000 Dijon(FR)**

(74) Mandataire: **Mongrédien, André et al**
**c/o BREVATOME 25, rue de Ponthieu**
**F-75008 Paris(FR)**

(54) **Soupape de sécurité à liquide pour enceinte de confinement étanche.**

(57) Une soupape de sécurité à liquide destinée à équiper une enceinte de confinement étanche telle qu'une boîte à gants comprend un tube plongeur (110) débouchant à son extrémité supérieure dans une cuve de rétention intérieure (112) équipée de déflecteurs (114) et au travers de laquelle le tube plongeur peut être relié à l'enceinte. A son extrémité inférieure, le tube plongeur (110) est immergé dans un liquide (122) tel que de l'huile contenu dans une enveloppe extérieure tubulaire (118). L'extrémité supérieure de cette enveloppe débouche à l'extérieur au travers d'une cuve de rétention extérieure (124) entourant la cuve de rétention intérieure (112). Les cuves de rétention (112,124) évitent que le liquide ne s'échappe vers l'enceinte ou à l'extérieur lorsqu'une dépression ou une surpression accidentelle se produit dans l'enceinte.

## SOUPAPE DE SECURITE A LIQUIDE POUR ENCEINTE DE CONFINEMENT ETANCHE.

L'invention concerne une soupape de sécurité à liquide conçue pour être associée à une enceinte de confinement étanche telle qu'une boîte à gants, dans laquelle règne une pression différente de la pression extérieure.

Dans différents secteurs parmi lesquels on citera les industries nucléaire, électronique et pharmaceutique, la médecine, la biologie, etc., on utilise des enceintes de confinement étanches dans lesquelles on maintient, dans les conditions normales de fonctionnement, une pression différente de la pression extérieure. Cette pression est inférieure à la pression atmosphérique lorsque l'atmosphère ou les produits contenus dans l'enceinte sont dangereux pour les personnes situées à l'extérieur (industrie nucléaire, biologie, etc.). Au contraire, la pression régnant dans l'enceinte est supérieure à la pression atmosphérique lorsque l'atmosphère contenue dans l'enceinte doit être maintenue stérile ou sans poussière (industries électronique et pharmaceutique, médecine, etc.).

Dans de telles enceintes de confinement, une défaillance des appareils permettant de maintenir la pression à l'intérieur de l'enceinte à la valeur souhaitée peut conduire à une dépression ou une surpression excessive dans l'enceinte. Lorsque cette dernière présente des parois minces comme c'est notamment le cas des boîtes à gants utilisées dans l'industrie nucléaire et des couveuses utilisées dans les hôpitaux, les parois de l'enceinte risquent alors d'imploser ou d'exploser. De plus, une différence de pression excessive avec l'extérieur peut aussi conduire à l'arrachement des gants ou des soufflets qui sont fixés de façon étanche sur la paroi de l'enceinte.

Pour remédier à ces inconvénients, on a recours habituellement à des soupapes de sécurité à liquide qui évitent qu'une différence de pression excessive avec l'extérieur ne soit atteinte.

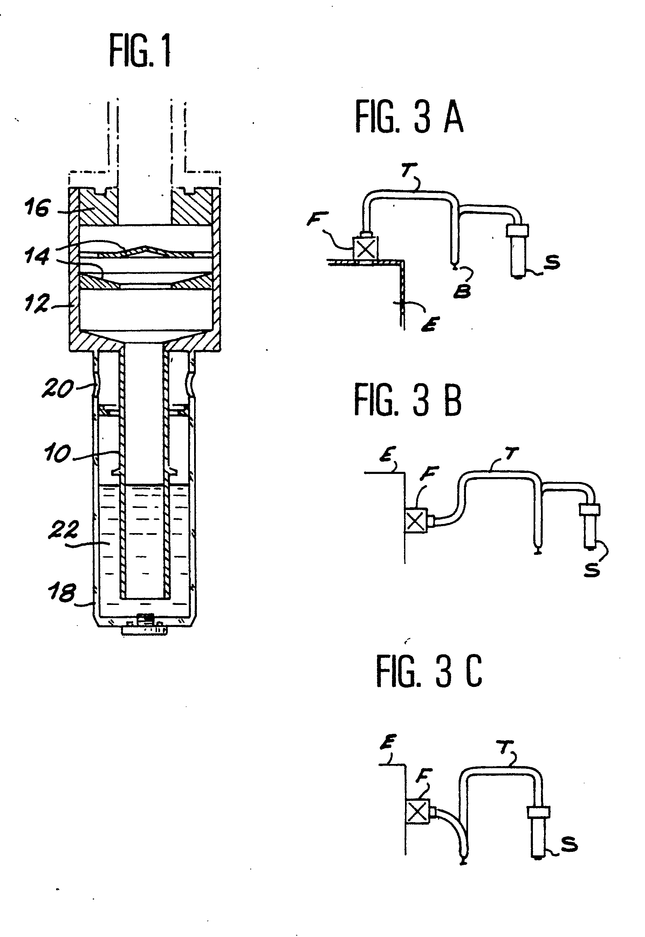

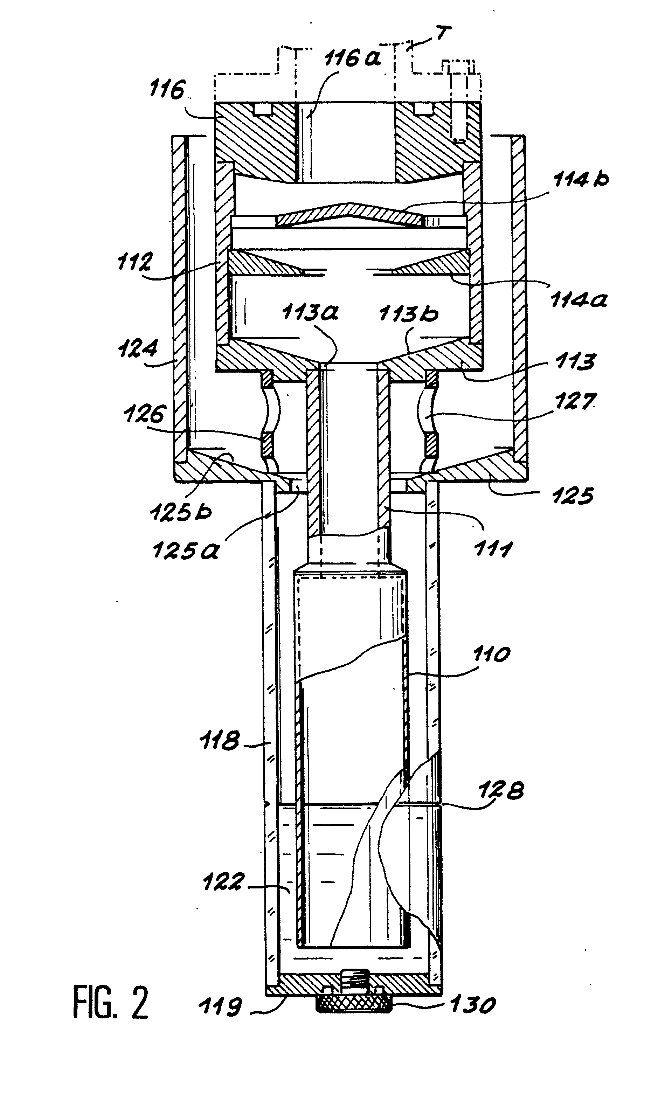

Un exemple d'une soupape de sécurité existante est illustré, en coupe longitudinale, sur la figure 1 des dessins annexés.

Cette soupape comprend un tube plongeur 10, d'axe vertical, dont l'extrémité supérieure est fixée sous le fond d'un bac de rétention cylindrique 12 dans lequel sont placés des déflecteurs 14. A son extrémité supérieure, le bac de rétention 12 comporte un raccord 16 par lequel il est normalement relié de façon étanche à une enceinte de confinement, par l'intermédiaire d'une tuyauterie (non représentée) équipée d'un filtre.

L'extrémité inférieure du tube plongeur 10 débouche au-dessus du fond d'une enveloppe extérieure tubulaire 18 disposée coaxialement autour du tube 10 et dont le bord supérieur est fixé au fond du bac de rétention 12. L'espace annulaire délimité entre le tube 10 et l'enveloppe extérieure 18 débouche directement à l'extérieur par des trous 20 formés dans la partie supérieure de cette enveloppe 18.

La partie basse de l'enveloppe extérieure tubulaire 18 contient un liquide 22, habituellement constitué par de l'huile, dans lequel est normalement immergée l'extrémité inférieure du tube plongeur 10.

Lorsqu'une dépression excessive se produit accidentellement à l'intérieur de l'enceinte, l'atmosphère extérieure chasse le liquide dans l'espace annulaire formé entre l'enveloppe 18 et le tube plongeur 10 jusqu'au bas de ce dernier, puis remonte dans le tube plongeur sous forme de bulles. Les déflecteurs 14 évitent alors la remontée du liquide vers le filtre qui est placé dans la tuyauterie reliant le raccord 16 à l'enceinte. Le colmatage ou la détérioration du filtre est ainsi empêché.

Au contraire, en cas de surpression excessive dans l'enceinte, l'atmosphère contenue dans cette dernière chasse le liquide contenu dans le tube plongeur jusqu'au bas de ce dernier, puis remonte sous forme de bulles dans l'espace annulaire formé entre ce tube et l'enveloppe extérieure 18, pour s'échapper par les trous 20.

Dans cette dernière hypothèse, la structure des soupapes de sécurité existantes a pour conséquence presque inévitable qu'une partie du liquide se trouve projetée à l'extérieur. Cela impose un nettoyage, toujours désagréable, et conduit, lorsque le filtre de protection de l'enceinte est défectueux ou détérioré, à un risque de contamination extérieure, dans le cas de l'industrie nucléaire. De plus, lorsque l'incident de pression a disparu, il est nécessaire de rétablir le niveau de liquide dans la soupape et des entrées d'air intempestives peuvent se produire dans l'enceinte et modifier la pureté de l'atmosphère contenue dans celle-ci.

L'invention a précisément pour objet une soupape de sécurité à liquide présentant une structure générale comparable à celle des soupapes existantes, tout en étant perfectionnée de façon à éviter que du liquide ne s'échappe en cas de surpression excessive de l'enceinte.

Selon l'invention, ce résultat est obtenu au moyen d'une soupape de sécurité à liquide pour enceinte de confinement étanche, comprenant un tube plongeur vertical dont l'extrémité supérieure est apte à communiquer avec l'intérieur de l'enceinte au travers d'un premier système de rétention de liquide et dont l'extrémité inférieure débouche dans une enveloppe extérieure communiquant en partie haute avec l'extérieur de l'enceinte, un liquide remplissant la partie basse de l'enveloppe extérieure, de telle sorte que le bas du tube plongeur est normalement immergé dans le liquide, cette soupape étant caractérisée par le fait qu'elle comprend de plus un deuxième système de rétention de liquide, au travers duquel l'enveloppe extérieure communique avec l'extérieur de l'enceinte.

Avantageusement, le deuxième système de rétention de liquide comprend un bac de rétention extérieur entourant le premier système de rétention de liquide et dont le fond présente une ouverture centrale que traverse le tube plongeur et sur laquelle est raccordée l'extrémité supérieure de l'enveloppe extérieure.

Dans ce cas, l'enveloppe extérieure est, de préférence, prolongée vers le haut, au-dessus du fond du bac de rétention extérieur, par une virole perforée qui est également raccordée sur le fond d'un bac de rétention intérieur constituant le premier système de rétention de liquide.

Le fond du bac de rétention extérieur présente généralement une face supérieure en entonnoir facilitant le retour du liquide dans le bas de l'enveloppe extérieure.

La mise à niveau du liquide est assurée, lorsqu'on est en équipression entre l'enceinte et l'extérieur, au moyen d'un repère placé sur l'enveloppe extérieure, qui est réalisée à cet effet en un matériau transparent.

On décrira maintenant, à titre d'exemple non limitatif, un mode de réalisation préféré de l'invention, en se référant aux dessins annexés, dans lesquels :

- la figure 1, déjà décrite, est une vue en coupe longitudinale d'une soupape de sécurité à liquide selon la technique antérieure ;

- la figure 2 est une vue en coupe longitudinale comparable à la figure 1 représentant, à plus grande échelle, une soupape de sécurité à liquide conforme à l'invention ; et

- les figures 3A, 3B et 3C représentent de façon très schématique trois possibilités d'implantation de la soupape de la figure 2 sur une enceinte de confinement étanche telle qu'une boîte à gants.

La soupape de sécurité à liquide illustrée sur la figure 2 est désignée de façon générale par la référence S.

Cette soupape S comprend un tube plongeur intérieur 110, d'axe vertical, dont l'extrémité supérieure est fixée coaxialement à l'extrémité inférieure d'un tube de plus petit diamètre 111. L'extrémité supérieure de ce tube 111 est fixée coaxialement sur le fond horizontal 113 d'un bac de rétention cylindrique intérieur 112, de telle sorte que le tube 111 débouche dans le bac 112 par une ouverture 113a formée au centre du fond 113.

Le fond 113 du bac de rétention 112 présente une face supérieure 113b en forme d'entonnoir, favorisant l'écoulement du liquide dans le tube plongeur 110.

A l'intérieur du bac de rétention 112 sont placées des plaques déflectrices horizontales, telles que les plaques 114a, 114b et 116 sur la figure 2. Ces plaques déflectrices présentent des perforations non alignées et des faces supérieures inclinées vers ces perforations, de façon à éviter toute remontée directe de liquide jusqu'en haut du bac 112 et à favoriser l'écoulement du liquide vers les tubes 111, puis 110.

A son extrémité supérieure, le bac de rétention intérieur 112 est fermé par un raccord 116 apte à être monté de façon étanche à l'extrémité d'une tuyauterie T reliant ce raccord à l'enceinte à protéger. Le raccord 116 comporte un passage central 116a par lequel la tuyauterie T communique avec le bac de rétention 112. Le raccord 116 peut prendre différentes formes selon le type de raccord équipant la tuyauterie T.

Le tube plongeur intérieur 110 est disposé coaxialement à l'intérieur d'une enveloppe extérieure tubulaire 118, de telle sorte que son extrémité inférieure soit située légèrement au-dessus du fond horizontal 119 de l'enveloppe 118.

L'extrémité supérieure de l'enveloppe extérieure tubulaire 118 est fixée sur le fond horizontal 125 d'un bac de rétention cylindrique extérieur 124 qui est disposé, conformément à l'invention, coaxialement autour du bac de rétention cylindrique intérieur 112.

L'ensemble formé par le bac 124 et par l'enveloppe 118 est solidarisé du reste de la soupape par une virole perforée 126 fixée entre les fonds 113 et 125 des bacs de rétention 112 et 124, dans le prolongement de l'enveloppe extérieure tubulaire 118. La virole 126 comporte des perforations 127 et une ouverture 125a est formée au centre du fond 125, pour permettre la communication entre le bac de rétention extérieur 124 et l'espace annulaire formé entre l'enveloppe 118 et le tube plongeur 110.

L'écoulement du liquide entre le bac de rétention 124 et l'espace annulaire formé entre l'enveloppe 118 et le tube 110 par l'intermédiaire des perforations 127 de la virole 126 est assuré en donnant à la face supérieure 125b du fond 125 du bac 124 la forme d'un entonnoir.

L'extrémité supérieure du bac de rétention extérieur 124 est ouverte et débouche à l'extérieur.

L'enveloppe extérieure tubulaire 118 est réalisée en un matériau transparent, de façon à pouvoir contrôler visuellement la présence dans la partie inférieure de cette enveloppe d'un liquide 122 tel que de l'huile permettant, dans des conditions normales de pression dans l'enceinte, d'isoler l'atmosphère régnant à l'intérieur de cette dernière de l'atmosphère extérieure. A cet effet, la partie basse du tube plongeur 110 est alors normalement immergée dans ce liquide.

L'enveloppe extérieure 118 présente avantageusement un repère de niveau de liquide tel qu'une gorge 128 formée sur sa surface extérieure. Lorsque l'intérieur de l'enceinte est à la même pression que l'extérieur, le niveau du liquide 122 est le même dans le tube plongeur 110 et autour de ce tube et ce niveau doit coïncider avec la gorge 128. Une vis de purge 130 traversant le fond 119 de l'enveloppe 118 permet, le cas échéant, d'évacuer un surplus de liquide et d'effectuer la mise à niveau.

Avantageusement, la soupape de sûreté S peut être reliée à une enceinte de confinement étanche telle qu'une boîte à gants selon l'un des trois schémas illustrés par les figures 3A, 3B et 3C.

Dans le cas de la figure 3A, la tuyauterie T par laquelle la soupape S est reliée à l'enceinte E débouche dans le plafond de cette dernière, au travers d'un filtre F disposé verticalement. En outre, la tuyauterie T est raccordée respectivement sur la soupape S et sur le filtre F par deux parties hautes horizontales entre lesquelles est située une partie en forme de U dans le bas de laquelle est placé un bouchon de purge B.

Sur la figure 3B, la forme de la tuyauterie T est le même que sur la figure 3A, mais cette tuyauterie débouche sur un panneau vertical de l'enceinte E, au travers d'un filtre F disposé horizontalement.

La figure 3C illustre une variante de la figure 3B dans laquelle la partie haute horizontale de la tuyauterie T raccordée sur le filtre F a été supprimée, de sorte que l'une des branches de la partie en forme de U est raccordée directement sur ce dernier.

Quel que soit le montage utilisé, le fonctionnement de la soupape S est le suivant.

Dans des conditions normales de pression dans l'enceinte, la partie basse du tube plongeur 110 reste noyée dans le liquide 122 et le confinement de l'intérieur de l'enceinte par rapport à l'extérieur est assuré. Un contrôle visuel de la pression régnant dans l'enceinte peut être effectué en observant le niveau du liquide 122 dans l'espace annulaire formé entre l'enveloppe extérieure 118 et le tube plongeur 110.

Lorsqu'une dépression excessive se produit dans l'enceinte, le fonctionnement de la soupape de l'invention est identique à celui des soupapes existantes tel que décrit auparavant en référence à la figure 1. Ainsi, de l'air prélevé à l'extérieur se trouve admis dans l'enceinte, par suite de la descente du niveau de liquide dans l'espace annulaire formé entre l'enveloppe 118 et le tube 110 jusqu'en bas de ce dernier. Cependant, le bac de rétention intérieur 112 empêche que le liquide ne soit entraîné dans la tuyauterie T, ce qui aurait pour conséquence un colmatage ou la détérioration du filtre F.

Au contraire, lorsque l'enceinte est soumise à une surpression intérieure excessive, les inconvénients des soupapes existantes sont supprimés. En effet, grâce à la présence du bac de rétention extérieur 124, l'atmosphère intérieure à l'enceinte, qui s'échappe alors vers l'extérieur en raison de l'abaissement du niveau de liquide dans le tube plongeur 110 jusqu'en bas de ce tube, n'entraîne pas de liquide 122 à l'extérieur de la soupape S.

Par conséquent, il n'est plus nécessaire de nettoyer et tout risque de contamination extérieure est supprimé, même si le filtre F est défectueux ou détérioré. De plus, le niveau de liquide revient à son état initial sans intervention extérieure, dès que les conditions normales de pression sont rétablies. En outre, toute entrée d'air intempestive dans l'enceinte est également évitée.

Bien entendu, l'invention n'est pas limitée au mode de réalisation qui vient d'être décrit à titre d'exemple, mais en couvre toutes les variantes. Ainsi, on comprendra notamment que le tube plongeur peut être fixé directement sur le bac de rétention intérieur et que les bacs de rétention, ainsi que l'enveloppe extérieure, peuvent prendre des formes différentes, sans sortir du cadre de l'invention.

## Revendications

1. Soupape de sécurité à liquide pour enceinte de confinement étanche, comprenant un tube plongeur vertical (110) dont l'extrémité supérieure est apte à communiquer avec l'intérieur de l'enceinte au travers d'un premier système de rétention de liquide (112) et dont l'extrémité inférieure débouche dans une enveloppe extérieure (118) communiquant en partie haute avec l'extérieur de l'enceinte, un liquide (122) remplissant la partie basse de l'enveloppe extérieure, de telle sorte que le bas du tube plongeur est normalement immergé dans le liquide, cette soupape étant caractérisée par le fait qu'elle comprend de plus un deuxième système de rétention de liquide (124), au travers duquel l'enveloppe extérieure (118) communique avec l'extérieur de l'enceinte.

2. Soupape selon la revendication 1, caractérisée par le fait que le deuxième système de rétention de liquide comprend un bac de rétention extérieur (124) entourant le premier système de rétention de liquide (112) et dont le fond présente une ouverture centrale (125a) que traverse le tube plongeur (110) et sur laquelle est raccordée l'extrémité supérieure de l'enveloppe extérieure (118).

3. Soupape selon la revendication 2, caractérisée par le fait que l'enveloppe extérieure (118) est prolongée vers le haut, au-dessus du fond du bac de rétention extérieur (124), par une virole perforée (126).

4. Soupape selon la revendication 3, caractérisée par le fait que le premier système de rétention de liquide comprend un bac de rétention intérieur (112) dont le fond présente une ouverture centrale (113a) sur laquelle est raccordée l'extrémité supérieure du tube plongeur (110), la virole perforée (126) étant également raccordée sur le fond du bac de rétention intérieur.

5. Soupape selon l'une quelconque des revendica tions 2 à 4, caractérisée par le fait que le fond du bac de rétention extérieur (124) présente une face supérieure (125b) en entonnoir.

6. Soupape selon l'une quelconque des revendications précédentes, caractérisée par le fait que l'enveloppe extérieure (118) est transparente et comporte un repère de niveau de liquide (128).

# FIG.1

# FIG. 3 A

# FIG. 3 B

# FIG. 3 C

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 237 637 (AINSWORTH) <br> * En entier * <br> --- | 1,2,4,5,6 | F 16 K 17/19 <br> G 21 F 7/04 |
| A | FR-A-1 407 149 (INST. DE RECHERCHE SID.) <br> * Résumé; figure 1 * <br> --- | 1 | |
| P,A | GB-A-2 215 436 (BRADY) <br> * En entier * <br> ----- | 1 | |

**DOMAINES TECHNIQUES RECHERCHES (Int. Cl.5)**

F 16 K
G 21 F
B 25 J

Le présent rapport a été établi pour toutes les revendications

| Lieu de la recherche | Date d'achèvement de la recherche | Examinateur |
|---|---|---|
| LA HAYE | 13-07-1990 | FONSECA Y FERNANDEZ H. |